# EUROPÄISCHE PATENTSCHRIFT

(11) **EP 3 108 951 B1**
(45) Veröffentlichungstag und Bekanntmachung des Hinweises auf die Patenterteilung: **13.06.2018**
(21) Anmeldenummer: 16020245.3
(22) Anmeldetag: 22.06.2016
(51) Int. Cl.: B01D 45/08, B01D 46/24

(54) **LUFTFILTERANLAGE**
AIR FILTER APPARATUS
INSTALLATION DE FILTRAGE D'AIR

(30) Priorität: 22.06.2015 DE 202015103277 U
(43) Veröffentlichungstag der Anmeldung: 28.12.2016
(73) Patentinhaber: ESTA Apparatebau GmbH & Co. KG, 89250 Senden (DE)
(72) Erfinder: Bernhard, Frank, 89264 Weißenhorn (DE); Novosel, Michael, 89522 Heidenheim (DE)
(74) Vertreter: Meyer, Thorsten

(56) Entgegenhaltungen:
- US-A1- 2014 224 123

## Beschreibung

Die Erfindung betrifft eine Luftfilteranlage mit einem vertikalen Aufbau.

Absaug- und Luftfilteranlagen für industrielle Anwendungen wie beispielsweise Werkhallen werden oft durch Partikel-belasteten Luftstrom in der Funktion beeinträchtigt. So führt ein hoher Partikelanteil zu vorschnellem Zusetzen der in solchen Absauganlagen vorgesehenen Filter. Zudem ist gerade bei mit Schweißrauch belasteter Luft problematisch, dass diese noch heiße oder glühende Partikel und Teilchen enthalten kann, welche zu einem Abbrand des Filters oder dem Luftstrom ausgesetzten Teilen wie Schläuche oder dergleichen der Anlage führen können.

Wünschenswert wäre es bei den von der Bauform her möglichst platzsparend konstruierten Absauganlagen eine effektivere und selektive Ausscheidung von Partikeln durch einen Materialvorabscheider zu ermöglichen.

Aus der DE 20 2010 009 611 U1 ist eine Schweissrauchabsauganlage bekannt bei der nach einem senkrechten Ansaugkanal ein Prallabscheider angeordnet ist, wobei der vorbekannte Prallabscheider gegenüber angeordnete v-förmige Profile aufweist.

Aus der DE 25 33 827 A1 ist eine Vorrichtung zum Abscheiden von Flüssigkeitstropfen und Feststoffpartikeln aus einem Gasstrom mit mehreren Abscheidelamellen, bekannt, wobei die Anströmkanten der Abscheidelamellen mit Fangrinnen versehen sind, welche gegeneinander versetzt angeordnet sind.

Aus der EP2363190A1 ist ein Filter für die Behandlung von Abgasen bekannt, mit einem Rahmen, in dem mehrere Profile sich überdeckend längs nebeneinander gehalten sind.

Aus der FR2778580A1 und der JPHO3-146108A ist eine Filteranlage bekannt in deren Innern mehrere Bleche versetzt neben- und übereinander angeordnet sind.

Aus der CN000201684485U ist ein zylinderförmiges Filterelement bekannt, dass die Wasserdurchflussmenge durch dasselbe einstellen kann, sodass dieses in verschiedenen Regionen eingesetzt werden kann. Aus US20140224123 ist eine Luftfilteranlage mit einem Funkenfänger bekannt. Aufgabe der Erfindung ist es daher eine Luftfilteranlage zur Verfügung zu stellen, bei dem eine einfache und kompakte Konstruktion eine möglichst effektive Selektion von Partikeln ermöglicht.

Diese Aufgabe wird durch eine Luftfilteranlage nach den Merkmalen des Anspruchs 1 gelöst.
Erfindungsgemäß ist eine Luftfilteranlage mit einem vertikalen Aufbau, wobei am oberen Bereich der Anlage eine Ansaugöffnung vorgesehen ist durch die mit abzuscheidenden Partikeln belastete Luft angesaugt werden kann, wobei im Innern der Anlage ein Vertikalkanal vorgesehen ist durch welchen die angesaugte belastete Luft im Innern der Anlage nach unten geführt wird, wobei der Vertikalkanal im unteren Bereich der Anlage seitlich eine Öffnung aufweist, durch welchen der Luftstrom auf einen im Bereich der Öffnung angeordneten Materialvorabscheider gelenkt wird und durch diesen hindurchgeführt wird, wobei im Luftweg nach dem Materialvorabscheider ein Prozessraum vorgesehen ist, in den der Luftstrom nach dem Materialvorabscheider gelangt, wobei in dem Prozessraum ein oder mehrere Filterkörper angeordnet ist/sind, wobei im Luftweg nach dem Prozessraum ein den Luftstrom antreibendes Gebläse vorgesehen ist, vorgeschlagen, der sich dadurch auszeichnet, dass der Materialvorabscheider eine Eintrittsseite und eine Austrittsseite für einen partikelbelasteten Luftstrom aufweist und aus mehreren vertikal getrennt voneinander ausgebildeten übereinander angeordneten streifenförmigen Abscheideelementen, besteht, wobei die Abscheideelemente von oben nach unten zunächst mit einem ansteigenden positiven Winkel gegen die Vertikale angeordnet sind und wenigstens ein unteres Abscheideelement in einem negativen Winkel gegen die Vertikale aufweist. Hierdurch ist auf besonders effektive Weise die hohe selektive Auslese von Partikeln durch die Luftfilteranlage ermöglicht.
Mit der Erfindung wird eine sehr effektive Reinigung gewährleistet, wodurch die Staubbeladung des Luftstroms deutlich sinkt und die Filterelemente nur noch mit feinen Staubpartikeln beaufschlagt werden. Dies führt zu einer deutlichen Verlängerung der Filterstandzeit und einer Reduktion der Betriebskosten, da weniger Druckluft für die Filterreinigung erforderlich ist und die Lebensdauer der Filter verlängert wird.
Durch die Umlenkung des Luftstroms auf einen im Bereich der Öffnung angeordneten Partikelprallabscheider, wodurch schwerere Teilchen zum einen im Vertikalkanal nach weiter nach unten Fallen, und kleinere noch durch den Luftstrom mitgeführte Teilchen im Prallabscheider gebremst werden und im Prallabscheider nach unten fallen, wird ein Großteil der Partikel noch vor Erreichen der Filterkörper ausgeschieden und die Standzeit der Anlage erheblich verlängert.
Von Vorteil ist unter dem Vertikalkanal und/oder dem Partikelprallabscheider eine Auffangschale vorgesehen, welche insbesondere ähnlich einer Schublade ausgeführt ist. Hierdurch ist eine Wartung und Leerung der Anlage sehr leicht möglich.

Durch die Anordnung der Abscheideelemente wird der Luftvolumenstrom gezielt abgelenkt. Dadurch wird eine Trennung der Fraktionen (Luft und darin enthaltene Partikel) erreicht. Dies hat zur Folge, dass der Luftstrom gereinigt wird.

Bevorzugterweise weist wenigstens eins der Abscheideelemente an seiner unteren Kante eine sich zur Austrittsseite öffnende untere Rinne auf. Dem folgend weist ebenso bevorzugterweise wenigstens eins der Abscheideelemente an seiner oberen Kante eine obere Rinne auf, die zur Eintrittsseite hin sich öffnet.

Von Vorteil sind die Winkel der Anstellung der Abscheideelemente zur Vertikalen zwischen 21° bis 31°, sowie zwischen 31° bis 41° und sowie zwischen -7° bis -13° gewählt.

Eine bevorzugte Ausgestaltung der Erfindung sieht vor, dass die Abscheideelemente von der Eintrittsseite her gesehen mit einem Überlapp hinter und untereinander angeordnet sind.

Eine Variante der Erfindung sieht vor, dass zwei Abscheideelemente mit dem gleichen Anstellwinkel gegen die Vertikale übereinander angeordnet sind.

Der Materialvorabscheider wird bevorzugterweise an der Eintrittsseite von vorne und/oder von oben angeströmt.

Von Vorteil sind die Abscheideelemente durch Bleche gebildet.

Eine besonders vorteilhafte Ausgestaltung der Erfindung sieht vor, dass sich die Öffnungsweite der unteren Kante der Abscheideelemente gegen eine gemeinsame Vertikale von oben her gesehen von Abscheideelement zu Abscheideelement verringert und sich beim untersten Abscheideelement wieder weitet.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig.1: eine schematische Schnittdarstellung durch die erfindungsgemäße Luftfilteranlage mit Materialvorabscheider,
- Fig. 2: eine schematische Schnittdarstellung durch die Luftfilteranlage aus Fig. 1 in Schrägansicht,
- Fig. 3: eine schematische Seitenansicht des Materialvorabscheiders,
- Fig. 4: den Materialvorabscheider aus Fig. 3 mit Blickrichtung von vorne auf die Eintrittsseite,
- Fig. 5: einen schematische Darstellung der Öffnungsweiten der unteren Enden der Abscheideelemente gegen eine gemeinsame Vertikale, und
- Fig. 6: eine schematische Darstellung des Luftstroms durch den Materialvorabscheider von Eintritts- nach Austrittsseite.

Die in den Figuren gleichen Bezugsziffern bezeichnen gleiche oder gleich wirkende Elemente.

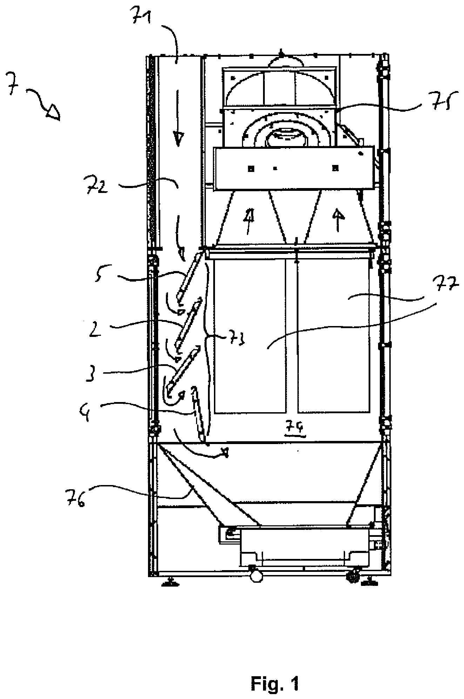

In Fig. 1 ist eine schematische Schnittdarstellung durch eine erfindungsgemäße Luftfilteranlage 7 gezeigt.

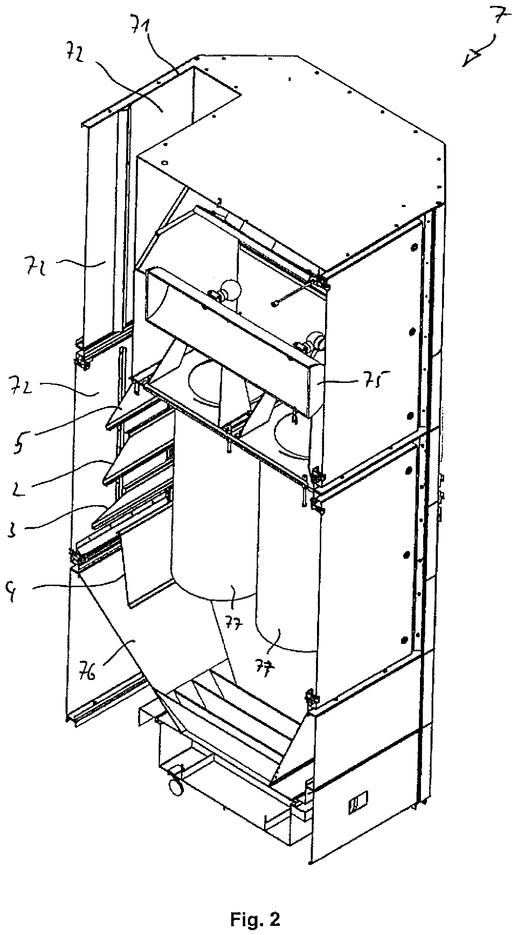

Fig. 1 und 2 zeigt eine beispielhafte Luftfilteranlage 7 mit einem vertikalen Aufbau, wobei am oberen Bereich der Anlage auf der Oberseite des Gehäuses eine Ansaugöffnung 71 vorgesehen ist durch die mit partikelbelastete Luft angesaugt werden kann.

In Fig. 1 ist der innere Aufbau der Anlage näher gezeigt. Im Innern der Anlage ist ein Vertikalkanal 72 vorgesehen durch welchen die angesaugte belastete Luft im Innern der Anlage senkrecht nach unten geführt wird, wobei der Vertikalkanal 72 im unteren Bereich der Anlage seitlich eine Öffnung 73 aufweist, durch welchen der Luftstrom (dargestellt durch die Pfeile) auf einen im Bereich der Öffnung angeordneten Materialvorabscheider 1, der aus den Abscheideelementen 5, 2, 3 und 4 gebildet ist, gelenkt wird und durch diesen hindurchgeführt wird.

Hierdurch werden größere Partikel gleich abgeschieden, da diese nach unten in die Auffangschale 76 fallen und nicht der Umlenkung des Luftstromes folgen. Die Auffangschale 76 ist ähnlich einer nach außen ausziehbaren Schublade ausgeführt.

Im Luftweg nach dem Materialvorabscheider 1, ist ein Prozessraum 74 vorgesehen, in die der Luftstrom nach dem Materialvorabscheider gelangt. Dabei sind in dem Prozessraum 74 mehrere Filterkörper 77 angeordnet, wobei der Luftstrom durch die Filterkörper 77 durch das darüber angeordnete, den Luftstrom antreibende, Gebläse 75 abgezogen wird.

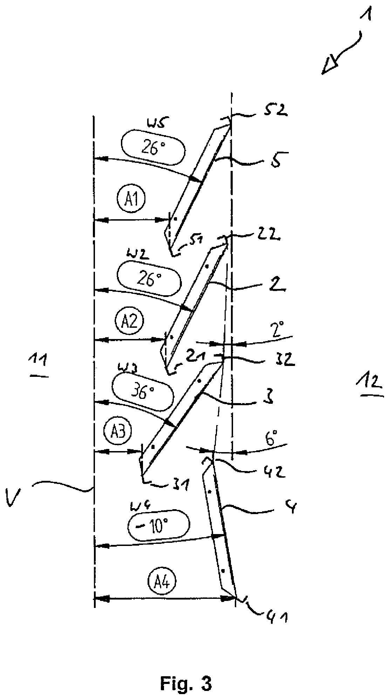

In Fig. 3 ist eine erläuternde Seitenansicht des Materialvorabscheiders 1 gezeigt, der partikelbelastete Luftstrom kann den Materialvorabscheider 1 von einer Eintrittsseite 11 zu einer Austrittsseite 12 durchströmen.

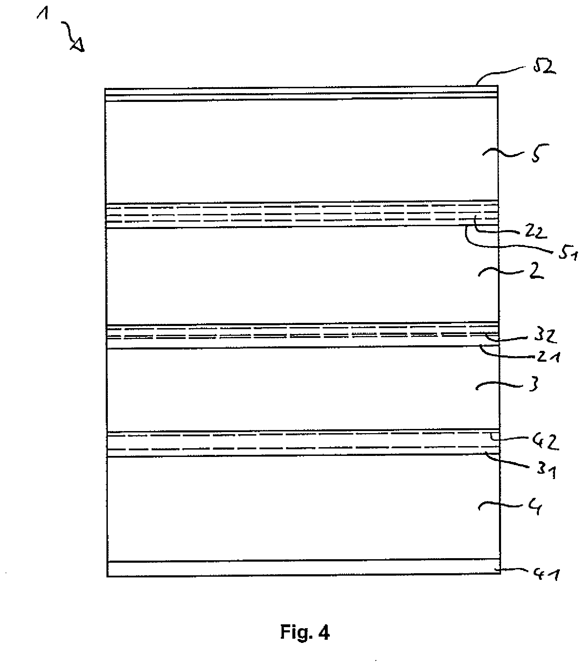

Dabei sind Abscheideelemente 5, 2, 3, 4 - im Beispiel durch Bleche gebildet - vertikal übereinander angeordnet. Die Abscheideelemente 5, 2, 3, 4 sind streifenförmig ausgebildet und von der Eintrittsseite 11 her gesehen mit einem Überlapp hinter und untereinander angeordnet (siehe hierzu auch Fig. 4).

Die Abscheideelemente 2, 3 und 4 bilden die zentrale Gruppe des Materialvorabscheiders. Die Abscheideelemente 2, 3 sind von oben nach unten zunächst mit einem ansteigenden positiven Winkel W2,W3 gegen die Vertikale V angeordnet und ein unteres Abscheideelement 4 weist in einem negativen Winkel W4 gegen die Vertikale V auf.

Die Winkel der Anstellung der Abscheideelemente 2, 3 und 4 zur Vertikalen sind dabei im Beispiel zu 26°, 36° und -10° gewählt worden. Diese Winkel haben sich als sehr effektiv in Versuchen gezeigt.

Im gezeigten Beispiel ist zusätzlich ein Abscheideelement 5 mit dem gleichen Anstellwinkel gegen die Vertikale über dem darunter angeordnetem Abscheideelement 2 vorgesehen worden.

Die Abscheideelemente 2, 3, 4, 5 weisen an seiner unteren Kante eine sich zur Austrittsseite 12 öffnende untere Rinne 21, 31, 41, 51 auf. Ebenfalls weisen die Abscheideelemente 2, 3, 4, 5 an ihrer oberen Kante eine obere Rinne 22, 32, 42, 52 auf, die zur Eintrittsseite 11 hin sich öffnet.

Durch die am Ende der Abscheideelemente befindlichen Kantungen oder Rinnen, die sich in horizontaler und vertikaler Richtung auch überschneiden, entstehen weitere positive Effekte. Zum einen können harte Abrisskanten vermieden werden, da sich am unteren Ende der Bleche die Luft an die Kantung "anschmiegen" kann. Dies verbessert die Umlenkung.

Am oberen Ende der Abscheideelemente wird durch die Kantung die Luft zu einer erneuten Umlenkung gezwungen, was wiederum dazu führt, dass weitere Partikel abgeschieden werden können.

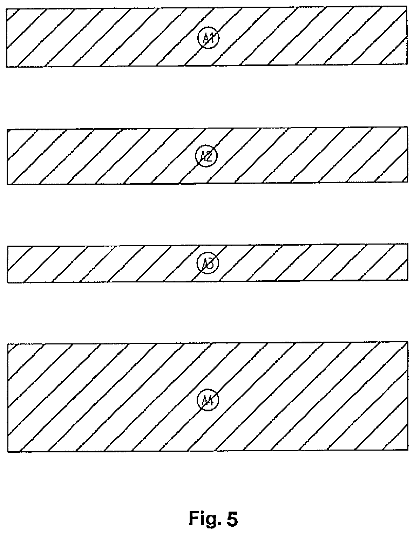

In Fig. 5 ist entsprechend Fig. 3 verdeutlicht, dass sich die Öffnungsweite A1 bis A3 der unteren Kante der Abscheideelemente 5, 2, 3, 4 gegen eine gemeinsame Vertikale V von oben her gesehen von Abscheideelement zu Abscheideelement 5, 2, 3 verringert und sich beim untersten Abscheideelement 4 wieder weitet (A4).

Durch die Kombination von Querschnittsverengung und Querschnittserweiterung entsteht eine Art Sichtereffekt. Dieser ist am untersten Blech am ausgeprägtesten. Zudem wird durch die Stellung des untersten Bleches weitestgehend verhindert, dass bereits abgeschiedenes Material wieder in den Luftvolumenstrom zurückgeführt wird.

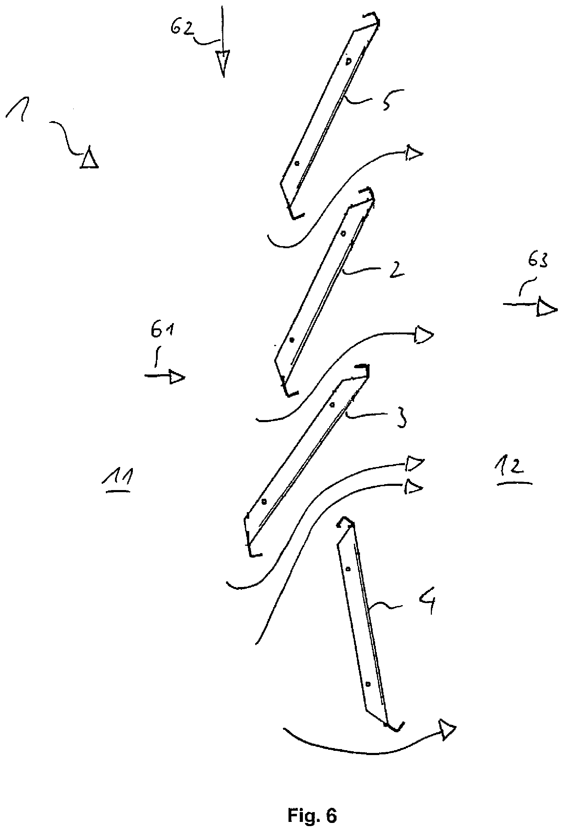

Fig. 6 zeigt nochmals den Luftstromweg von der Ansaugung an der Eintrittsseite 11 von vorne 61 und hauptsächlich von oben 62 und den Ausstoß 63 an der Austrittsseite 12. Durch die Umlenkung an den Abscheideelementen 5, 2, 3, 4 und den Richtungswechsel von vertikal von oben nach horizontal zum Ausstoß werden vom kommenden Luftstrom 61, 62 mitgeführte Partikel gut vor und am Materialvorabscheider 1 abgetrennt.

### Bezugszeichenliste

- 1: Materialvorabscheider
- 11: Eintrittsseite
- 12: Austrittsseite
- 2: Abscheideelement
- 21: untere Rinne
- 22: obere Rinne
- 3: Abscheideelement
- 31: untere Rinne
- 32: obere Rinne
- 4: Abscheideelement
- 41: untere Rinne
- 42: obere Rinne
- 5: Abscheideelement
- 51: untere Rinne
- 52: obere Rinne
- 61: Anströmung von vorne
- 62: Anströmung von oben
- 63: Ausstoß
- 7: Luftfilteranlage
- 71: Ansaugöffnung
- 72: Vertikalkanal
- 73: Öffnung
- 74: Prozessraum
- 75: Gebläse
- 76: Auffangschale
- 77: Filterkörper
- A1 bis A4: Öffnungsweite
- Wi: Winkel des Abscheideelements gegen die Vertikale
- V: Vertikale

## Patentansprüche

1. Luftfilteranlage (7) mit einem vertikalen Aufbau,
wobei am oberen Bereich der Anlage eine Ansaugöffnung (71) vorgesehen ist durch die mit abzuscheidenden Partikeln belastete Luft angesaugt werden kann,
wobei im Innern der Anlage ein Vertikalkanal (72) vorgesehen ist durch welchen die angesaugte belastete Luft im Innern der Anlage nach unten geführt wird,
wobei der Vertikalkanal (72) im unteren Bereich der Anlage seitlich eine Öffnung (73) aufweist, durch welche der Luftstrom auf einen im Bereich der Öffnung angeordneten Materialvorabscheider (1) gelenkt wird und durch diesen hindurchgeführt wird,
wobei im Luftweg nach dem Materialvorabscheider (1) ein Prozessraum (74) vorgesehen ist, in den der Luftstrom nach dem Materialvorabscheider (1) gelangt, wobei in dem Prozessraum (74) ein oder mehrere Filterkörper (77) angeordnet ist/sind, wobei im Luftweg nach dem Prozessraum (74) ein den Luftstrom antreibendes Gebläse (75) vorgesehen ist, wobei der Materialvorabscheider (1) eine Eintrittsseite (11) und eine Austrittsseite (12) für einen partikelbelasteten Luftstrom aufweist, **dadurch gekennzeichnet, dass** er aus mehreren vertikal getrennt voneinander ausgebildeten übereinander angeordneten streifenförmigen Abscheideelementen (2, 3, 4),
besteht, wobei die Abscheideelemente (2, 3) von oben nach unten zunächst mit einem ansteigenden positiven Winkel (W2,W3) gegen die Vertikale (V) angeordnet sind und wenigstens ein unteres Abscheideelement (4) in einem negativen Winkel (W4) gegen die Vertikale (V) aufweist.

2. Luftfilteranlage nach Anspruch 1,
**dadurch gekennzeichnet,**
**dass** unter dem Vertikalkanal (72) und/oder dem Materialvorabscheider (1) eine Auffangschale (76) vorgesehen ist, welche insbesondere ähnlich einer Schublade ausgeführt ist.

3. Luftfilteranlage nach Anspruch 1 oder 2,
**dadurch gekennzeichnet,**
**dass** wenigstens eins der Abscheideelemente (2, 3, 4, 5) an seiner unteren Kante eine sich zur Austrittsseite (12) öffnende untere Rinne (21, 31, 41, 51) aufweist.

4. Luftfilteranlage nach Anspruch 1, 2 oder 3,
**dadurch gekennzeichnet,**
**dass** wenigstens eins der Abscheideelemente (2, 3, 4, 5) an seiner oberen Kante eine obere Rinne (22, 32, 42, 52) aufweist, die zur Eintrittsseite (11) hin sich öffnet.

5. Luftfilteranlage nach einem der Ansprüche 1 bis 4,
**dadurch gekennzeichnet,**
**dass** die Winkel der Anstellung der Abscheideelemente (2, 3 und 4) zur Vertikalen zwischen 21° bis 31°, sowie zwischen 31° bis 41° und sowie zwischen -7° bis -13° gewählt sind.

6. Luftfilteranlage nach einem der Ansprüche 1 bis 5,
**dadurch gekennzeichnet,**
**dass** die Abscheideelemente (2, 3, 4, 5) von der Eintrittsseite (11) her gesehen mit einem Überlapp hinter und untereinander angeordnet sind.

7. Luftfilteranlage nach einem der Ansprüche 1 bis 6,
**dadurch gekennzeichnet,**
**dass** zwei Abscheideelemente (2, 5) mit dem gleichen Anstellwinkel gegen die Vertikale übereinander angeordnet sind.

8. Luftfilteranlage nach einem der Ansprüche 1 bis 7,
**dadurch gekennzeichnet,**
**dass** der Materialvorabscheider (1) an der Eintrittsseite (11) von vorne und/oder von oben angeströmt wird.

9. Luftfilteranlage nach einem der Ansprüche 1 bis 8,
**dadurch gekennzeichnet,**
**dass** die Abscheideelemente (2, 3, 4, 5) durch einzelne Bleche gebildet sind.

10. Luftfilteranlage nach einem der Ansprüche 1 bis 9,
**dadurch gekennzeichnet,**
**dass** sich die Öffnungsweite (A1 bis A3) der unteren Kante der Abscheideelemente gegen eine gemeinsame Vertikale (V) von oben her gesehen von Abscheideelement zu Abscheideelement (5, 2, 3) verringert und sich beim untersten Abscheideelement (4) wieder weitet (A4).

## Claims

1. An air filter apparatus (7) with a vertical structure,
wherein an intake opening (71) is provided at the upper area of the apparatus, through which air contaminated with the particles to be separated can be sucked in,
wherein the apparatus contains a vertical channel (72) through which the sucked in and polluted air inside the system is guided downwards,
the vertical channel (72) has an opening (73) laterally in the lower area of the apparatus, through which the air stream is directed onto and passed through a material pre-separator (1) arranged in the region of the opening,
wherein a process space (74) is provided in the air path downstream of the material pre-separator (1), into which the air flow arrives after the material pre-separator (1), one or more filter bodies (77) being arranged in the process space(74),
wherein a blower (75) driving the air flow is provided in the air path after the process space (74),
in which the material pre-separator (1) has an inlet side (11) and an outlet side (12) for a particle-laden air flow, **characterized in that** it consists of a plurality of separating elements (2, 3, 4) which are arranged vertically, strip-shaped and formed separately from one another,
wherein the separating elements (2, 3) are arranged from top to bottom initially with a rising positive angle (W2, W3) against the vertical (V) and has at least one lower separating element (4) at a negative angle (W4) against the vertical (V).

2. The air filter apparatus according to claim 1,
**characterised in**
**that** a collecting tray (76) is provided below the vertical channel (72) and/or the material pre-separator (1), which tray is designed in a similar way to a drawer.

3. The air filter apparatus according to claim 1 or 2,
**characterised in**
**that** at least one of the separating elements (2, 3, 4, 5) has, at its lower edge, a lower channel (21, 31, 41, 51) opening to an outlet side (12).

4. The air filter apparatus according to claim 1, 2 or 3,
**characterised in**
**that** at least one of the separating elements (2, 3, 4, 5) has at its lower edge a lower channel (32, 42, 52, 11) opening to an outlet side (22).

5. The air filter apparatus according to one of the claims 1 to 4,
**characterised in**
**that** the angles of the position of the separating elements (2, 3 and 4) with respect to the vertical are selected between 21° and 31°, and between 31° and 41° as well as between -7° and -13°.

6. The air filter apparatus according to one of the claims 1 to 5,
**characterised in**
**that** the separating elements (2, 3, 4, 5) are arranged behind and below one another with an overlap, viewed from the inlet side (11).

7. The air filter apparatus according to one of the claims 1 to 6,
**characterised in**
**that** two separating elements (2, 5) are arranged one above the other at the same angle of attack against the vertical.

8. The air filter apparatus according to one of the claims 1 to 7,
**characterised in**
**that** the material pre-separator (1) on the entry side (11) is exposed to the flow of material from the front and/or from the top.

9. The air filter apparatus according to one of the claims 1 to 8,
**characterised in**
**that** the separating elements (2, 3, 4, 5) are formed of individual plates.

10. The air filter apparatus according to one of the claims 1 to 9,
**characterised in**
**that** the opening width (A1 to A3) of the lower edge of the separating elements against a common vertical (V) tapers, seen from the top, from one separating element to another separating element (5, 2, 3) and then expands again at the lowermost separating element (4).

## Revendications

1. Installation de filtrage d'air (7) avec une structure verticale,
dans lequel une ouverture d'admission (71) est prévue dans la zone supérieure de l'appareil, à travers laquelle l'air contaminé par des particules à séparer peut être aspiré,
dans lequel l'appareil contient un canal vertical (72) à travers lequel l'air aspiré et pollué à l'intérieur du système est dirigé vers le bas,
le canal vertical (72) présente une ouverture (73) latérale dans la zone inférieure de l'appareil, à travers laquelle le courant d'air est dirigé sur et à travers un pré-séparateur de matériau (1) disposé dans la zone de l'ouverture,
où un espace de traitement (74) est prévu dans le chemin d'air en aval du pré-séparateur de matériau (1), dans lequel le flux d'air arrive après le pré-séparateur de matériau (1), un ou plusieurs corps de filtre (77) étant disposés dans l'espace de traitement (74),
où une soufflerie (75) entraînant le flux d'air est prévue dans le chemin d'air après l'espace de traitement (74),
dans lequel le pré-séparateur de matériau (1) présente un côté entrée (11) et un côté sortie (12) pour un flux d'air chargé de particules, **caractérisé en ce qu'**il consiste en une pluralité d'éléments séparateurs (2, 3, 4) qui sont disposés verticalement, en forme de bande et formés séparément l'un de l'autre,
dans lequel les éléments séparateurs (2, 3) sont agencés de haut en bas initialement avec un angle positif ascendant (W2, W3) par rapport à la verticale (V) et présente au moins un élément séparateur inférieur (4) à un angle négatif (W4) par rapport à la verticale (V).

2. Installation de filtrage d'air selon la revendication 1,
**caractérisée** en
qu'un bac collecteur (76) est prévu sous le canal vertical (72) et/ou le pré-séparateur de matériau (1), lequel bac est conçu de la même manière qu'un tiroir.

3. Installation de filtrage d'air selon les revendications 1 ou 2,
**caractérisée** en
qu'au moins l'un des éléments séparateurs (2, 3, 4, 5) présente, en son bord inférieur, un bas canal (21, 31, 41, 51) s'ouvrant vers un côté sortie (12).

4. Installation de filtrage d'air selon les revendications 1, 2 ou 3,
**caractérisée** en
qu'au moins l'un des éléments séparateurs (2, 3, 4, 5) présente, en son bord inférieur, un canal inférieur (32, 42, 52, 11) s'ouvrant vers un côté sortie (22).

5. Installation de filtrage d'air selon l'une des revendications 1 à 4,
**caractérisée** en
que les angles de position des éléments séparateurs (2, 3 et 4) par rapport à la verticale sont sélectionnés entre 21° et 31°, et entre 31° et 41° ainsi qu'entre -7° et -13°.

6. Installation de filtrage d'air selon l'une des revendications 1 à 5,
**caractérisée** en
que les éléments séparateurs (2, 3, 4, 5) sont disposés derrière et en dessous l'un de l'autre en se chevauchant, vu du côté entrée (11).

7. Installation de filtrage d'air selon l'une des revendications 1 à 6,
**caractérisée** en
que deux éléments séparateurs (2, 5) sont disposés l'un au-dessus de l'autre avec le même angle d'attaque par rapport à la verticale.

8. Installation de filtrage d'air selon l'une des revendications 1 à 7,
**caractérisée** en
que le pré-séparateur de matériau (1) sur le côté entrée (11) est exposé à l'écoulement de matériau par l'avant et/ou par le haut.

9. Installation de filtrage d'air selon l'une des revendications 1 à 8,
**caractérisée** en
que les éléments séparateurs (2, 3, 4, 5) sont constitués de plaques individuelles.

10. Installation de filtrage d'air selon l'une des revendications 1 à 9,
**caractérisée** en
que la largeur d'ouverture (A1 à A3) du bord inférieur des éléments séparateurs par rapport à une verticale commune (V) rétrécit, vu du haut, d'un élément séparateur à un autre élément séparateur (5, 2, 3), avant de se redéployer au niveau de l'élément séparateur le plus bas (4).
